# FASCICULE DE BREVET EUROPEEN

(11) **EP 2 344 812 B1**
(45) Date de publication et mention de la délivrance du brevet: **04.05.2016**
(21) Numéro de dépôt: 09793563.9
(22) Date de dépôt: 02.11.2009
(51) Int. Cl.: F23C 99/00

(54) **PROCEDE D'ADAPTATION A TOUT TYPE D'OXYDES, D'UNE INSTALLATION A CYCLE THERMOCHIMIQUE ET INSTALLATION POUR LA MISE EN OEUVRE DE CE PROCEDE**
VERFAHREN ZUM ANPASSEN EINER ANLAGE MIT EINEM THERMOCHEMISCHEN KREISLAUF AN ALLE ARTEN VON OXIDEN, UND ANLAGE ZUR DURCHFÜHRUNG DES VERFAHRENS
METHOD FOR ADAPTING AN INSTALLATION WITH A THERMOCHEMICAL CYCLE TO ALL TYPES OF OXIDES, AND INSTALLATION FOR IMPLEMENTING SAID METHOD

(30) Priorité: 04.11.2008 FR 0857484
(43) Date de publication de la demande: 20.07.2011
(73) Titulaire: Morin, Jean-Xavier, 45170 Neuville Aux Bois (FR)
(72) Inventeur: Morin, Jean-Xavier, 45170 Neuville Aux Bois (FR)
(74) Mandataire: Lenne, Laurence
(86) Numéro de dépôt international: PCT/FR2009/052108
(87) Numéro de publication internationale: WO 2010/052415

(56) Documents cités:
- WO-A1-2005/003632
- WO-A1-2009/021258
- FR-A1- 2 850 156
- US-A- 3 969 089
- Terry Wall; Yianghui Liu: "Chemical Looping Combustion and CO2 capture: Status and Developments", , 29 février 2008 (2008-02-29), XP002675699, Extrait de l'Internet: URL:http://www.ccsd.biz/publications/files /TN/TN%2032%20Chem%20looping%20updated_web .pdf [extrait le 2012-05-10]

## Description

L'invention concerne un procédé d'adaptation à tout type d'oxydes, d'une installation à cycle thermochimique de conversion de combustible avec capture du dioxyde de carbone, et une installation pour la mise en oeuvre de ce procédé.

Pour capturer puis stocker les émissions de dioxyde de carbone des installations de production d'énergie utilisant des combustibles solides d'origine fossile, les développements technologiques ont mené à des voies multiples qui visent à :
- soit éliminer l'azote de l'air en amont de l'installation en utilisant de l'oxygène produit par une unité cryogénique de séparation d'air, par exemple pour la pré-capture de dioxyde de carbone par gazéification préalable des combustibles ou pour oxycombustion avec de l'oxygène quasi pur mélangé à des fumées recyclées de dioxyde de carbone et de vapeur d'eau; la production d'oxygène constitue le verrou technologique et économique de ces filières ;
- soit à traiter des fumées diluées par de l'azote et à en extraire sélectivement le dioxyde de carbone, par un procédé de post capture grâce à des solvants du type amines ; l'énergie de régénération du solvant constitue alors le verrou technologique et économique.

Les pertes de rendement provoquées par la capture de dioxyde de carbone via ces technologies peuvent conduire à abaisser de dix points le rendement net des centrales actuelles de production thermique d'électricité, ce qui augmente le prix du KWh d'environ 30 à 50 %.

Pour s'affranchir des contraintes liées à la production d'oxygène par liquéfaction classique, une première voie est de le produire par voie non cryogénique. Ceci est bien adapté à la réhabilitation d'installations existantes. Une autre voie encore plus poussée est d'intégrer directement cette production d'oxygène dans le processus de combustion, par cycle thermochimique

Les cycles thermochimique de transport d'oxygène utilisant des oxydes métalliques pour la production de dioxyde de carbone pur à partir de combustibles fossiles remontent aux années 1950 et utilisaient des lits fluidisés denses interconnectés. Ces cycles n'ont pas été mis en oeuvre industrielle. Puis est apparue l'utilisation des mêmes techniques pour une finalité différente à atteindre qui est celle de la combustion de combustibles fossiles pour production d'électricité avec capture intégrée de dioxyde de carbone, utilisant des lits fluidisés circulants et non plus des lits fluidisés denses.

Il demeure de nombreux aspects techniques qui ne sont pas résolus et qui requièrent de nouvelles approches.

C'est ainsi que l'utilisation de lits fluidisés rapides et non plus de lits fluidisés circulants est seule adaptée à fournir les débits de solides porteurs d'oxygène, afin d'assurer une combustion complète et non pas une oxydation partielle des combustibles, ce qui est le cas actuellement. Le choix du solide, porteur d'oxygène est complexe, car il doit satisfaire à la fois à des critères de performances en capacité d'oxygène, de tenue thermomécanique pour éviter sa fragmentation et son attrition par cyclage et enfin satisfaire à des critères de coût, puisque il s'agit de centaines de tonnes d'inventaire à remplacer périodiquement.

La recherche de porteurs d'oxygène d'origine naturelle s'est donc imposée comme une voie possible.

Une telle installation à cycle thermochimique comporte une première boucle à lit fluidisé circulant comportant un premier réacteur, dit d'oxydation, fluidisé par de l'air, et associé à un premier séparateur cyclone et une conduite de retour en sortie du premier cyclone vers le premier réacteur et une deuxième boucle à lit fluidisé circulant comportant un deuxième réacteur, dit de combustion du point de vue des combustibles introduits et dit de réduction du point de vue des oxydes mis en contact avec le combustible provoquant ainsi la réduction des dits oxydes, fluidisé par du dioxyde de carbone et de la vapeur d'eau, dans lequel est injecté un combustible et qui est associé à un deuxième séparateur cyclone et une conduite de retour en sortie du deuxième cyclone vers le deuxième réacteur. Ces deux boucles sont interconnectées par des moyens de transfert d'oxydes métalliques de la première boucle, en particulier de sa conduite de retour, vers le deuxième réacteur et de la deuxième boucle, en particulier de sa conduite de retour, vers le premier réacteur. Une telle installation est décrite par le document "Chemical looping Combustion and CO₂ capture; status and developments".

Mais le renchérissement de ces oxydes naturels et la variété possible des combustibles utilisés pendant la durée de vie d'une centrale électrique de l'ordre de cinquante à soixante-dix ans requiert de pouvoir fonctionner avec une grande variété d'oxydes métalliques.

Les oxydes métalliques porteurs d'oxygène présentent des caractéristiques réactionnelles variables avec une oxydation généralement exothermique mais qui peut être endothermique et une réduction généralement endothermique mais qui peut être également exothermique.

Sachant que le contrôle de température de ces réactions d'oxydation et de réduction est essentiel pour l'obtention de rendements élevés de conversion thermochimique des combustibles, pour l'obtention d'allure de marche à puissance minimale et la plus faible possible, pour l'obtention des états désirés de réduction des oxydes métalliques et éviter les agglomérations de matériau de lit, le problème posé est de proposer une configuration de cycle thermochimique qui est capable de s'adapter à ces différents oxydes et à leurs chaleurs réactionnelles opposées

Enfin il est nécessaire de minimiser la chaleur requise par le deuxième réacteur sous forme de solides extraits du premier réacteur, et donc de minimiser la quantité de solides à échanger entre les deux réacteurs.

Finalement, il faut rechercher la compacité maximale de l'installation pour réduire les coûts d'investissement.

Pour résoudre ces problèmes, l'invention propose un procédé d'adaptation à tout type d'oxydes, d'une installation à cycle thermochimique de conversion de combustible avec capture du dioxyde de carbone, cette installation comportant une première boucle à lit fluidisé rapide comportant un premier réacteur , d'oxydation, et associé à au moins un premier séparateur cyclone et une conduite de retour en sortie du premier cyclone vers le premier réacteur et une deuxième boucle à lit fluidisé rapide comportant un deuxième réacteur, de combustion et de réduction, pourvu d'un dispositif d'introduction de combustible et associé à au moins un deuxième séparateur cyclone et une conduite de retour en sortie du deuxième cyclone vers le deuxième réacteur, ces deux boucles étant interconnectées par un premier moyen de transfert d'oxydes de la première boucle vers le deuxième réacteur et par un second moyen de transfert d'oxydes de la deuxième boucle vers le premier réacteur, procédé caractérisé en ce qu'il consiste à extraire de la chaleur de façon réglable sur ledit premier moyen de transfert d'oxydes et sur ledit second moyen de transfert d'oxydes au moyen d'au moins un troisième réacteur comportant un échangeur et dans lequel débouchent en entrée ledit premier moyen de transfert d'oxydes et ledit second moyen de transfert d'oxydes, ledit troisième réacteur à lit mobile comportant une entrée supérieure de réception des solides du premier séparateur cyclone et une sortie latérale de renvoi vers le premier réacteur, ainsi qu'une entrée supérieure de réception des solides du deuxième séparateur cyclone et une sortie latérale de renvoi vers le deuxième réacteur.

Grâce à l'installation conforme à l'invention, il est possible à chaque boucle circulante d'extraire de la chaleur, selon les caractéristiques spécifiques des oxydes utilisés, sans interférer avec la circulation principale des oxydes entre les deux réacteurs.

Il est également possible de combiner cet échange de chaleur avec la circulation principale des oxydes entre les deux réacteurs, afin d'optimiser les températures de chaque réacteur.

L'invention concerne également une installation à cycle thermochimique de conversion de combustible avec capture du dioxyde de carbone grâce à un échange de tout type d'oxydes, cette installation comportant une première boucle à lit fluidisé rapide comportant un premier réacteur, d'oxydation, et associé à au moins un premier séparateur cyclone et une conduite de retour en sortie du premier cyclone vers le premier réacteur et une deuxième boucle à lit fluidisé rapide comportant un deuxième réacteur, de combustion et de réduction, pourvu d'un dispositif d'introduction de combustible et associé à au moins un deuxième séparateur cyclone et une conduite de retour en sortie du deuxième cyclone vers le deuxième réacteur, ces deux boucles étant interconnectées par un premier moyen de transfert d'oxydes de la première boucle vers le deuxième réacteur et par un second moyen de transfert d'oxydes de la deuxième boucle vers le premier réacteur, pour la mise en oeuvre d'un tel procédé, caractérisée en ce qu'elle comporte un moyen réglable d'extraction de chaleur sur ledit premier moyen de transfert d'oxydes et sur ledit second moyen de transfert d'oxydes et en ce que ce moyen réglable d'extraction de chaleur est constitué d'au moins un troisième réacteur comportant un échangeur et dans lequel débouchent en entrée ledit premier moyen de transfert d'oxydes et ledit second moyen de transfert d'oxydes, ledit troisième réacteur à lit mobile comportant une entrée supérieure de réception des solides du premier séparateur cyclone et une sortie latérale de renvoi vers le premier réacteur, ainsi qu'une entrée supérieure de réception des solides du deuxième séparateur cyclone et une sortie latérale de renvoi vers le deuxième réacteur.

L'invention est décrite ci-après plus en détail à l'aide de figures ne représentant que des modes de réalisation préférées de l'invention.
La figure 1 est une vue schématique en élévation d'une installation conforme à l'invention selon un premier mode de réalisation.
La figure 2 est une vue schématique en élévation d'une installation conforme à l'invention selon un deuxième mode de réalisation.
La figure 3 est une vue schématique de dessus d'une installation conforme à l'invention selon d'un troisième mode de réalisation.
La figure 4A est une vue en perspective de détail d'une installation conforme à l'invention.
La figure 4B est une vue de dessus de la figure précédente.

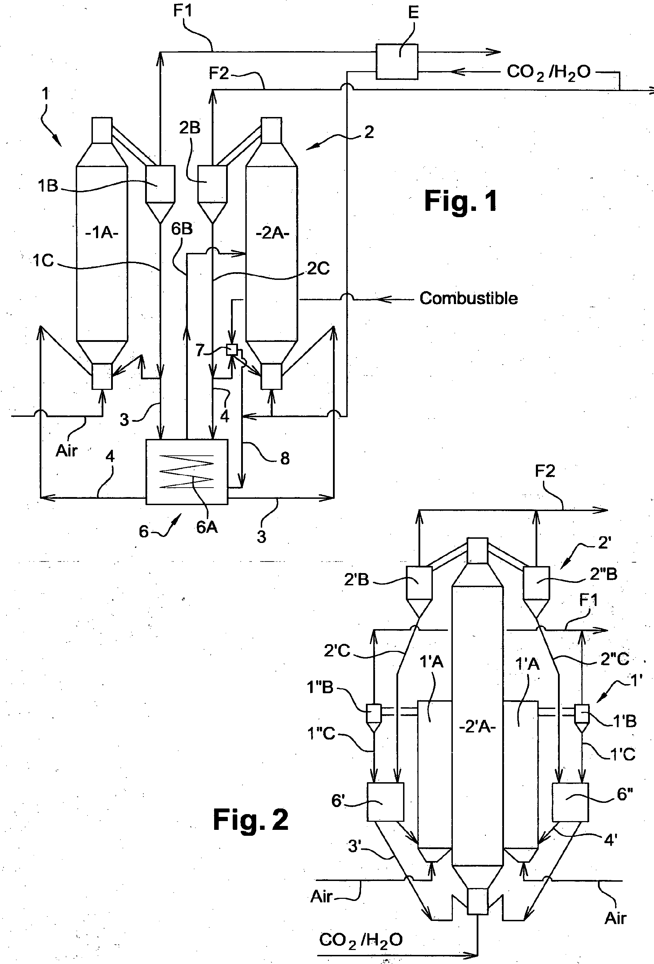

Comme représenté sur la figure 1, une installation à cycle thermochimique de conversion de combustibles avec capture du dioxyde de carbone grâce à un échange de tout type d'oxydes, conforme à l'invention, comporte une première boucle à lit fluidisé circulant rapide 1 comportant un premier réacteur 1A, d'oxydation, de forme cylindrique ou parallélépipédique, fluidisé par de l'air et associé à au moins un premier séparateur cyclone 1B et une conduite de retour 1C en sortie du premier cyclone vers le premier réacteur et une deuxième boucle à lit fluidisé rapide 2 comportant un deuxième réacteur 2A, de combustion et de réduction, de forme cylindrique ou parallélépipédique, pourvu d'un dispositif d'introduction de combustible et associé à au moins un deuxième séparateur cyclone 2B et une conduite de retour 2C en sortie du deuxième cyclone vers le deuxième réacteur.

En partie haute des premier et deuxième séparateurs cyclones 1B, 2B sont évacués les gaz de conversion thermochimique F1, F2. Pour minimiser la chaleur requise par le deuxième réacteur 2A sous forme de solides extraits du premier réacteur 1A, et donc minimiser la quantité de solides à échanger entre les deux réacteurs, un échangeur gaz/gaz E assure le préchauffage poussé du gaz de fluidisation du deuxième réacteur 2A, à partir de l'enthalpie disponible dans les gaz issus du premier réacteur F1.

Ces deux boucles 1, 2 sont interconnectées par un premier moyen de transfert d'oxydes de la première boucle 1 vers le deuxième réacteur 2A, à savoir une première conduite de transfert 3 connectée à la première conduite de retour 1C, et par un second moyen de transfert d'oxydes de la deuxième boucle 2 vers le premier réacteur 1A, à savoir une seconde conduite de transfert 4 connectée à la deuxième conduite de retour 2C. Généralement, des oxydes métalliques sont utilisés.

Selon l'invention, l'installation comporte un moyen réglable d'extraction de chaleur 6 sur la première conduite de transfert d'oxydes 3 et sur la seconde conduite de transfert d'oxydes 4.

Ce moyen réglable d'extraction de chaleur peut être constitué d'au moins un troisième réacteur à lit mobile aéré ou d'au moins un troisième réacteur fluidisé, présentant un évent 6B vers le deuxième réacteur 2A.

Selon le mode de réalisation représenté sur la figure 1, ce troisième réacteur 6 est à lit fluidisé dense à chambres séparées par déversoir, équipé d'un échangeur de chaleur 6A immergé.

Lorsque ce moyen réglable d'extraction de chaleur 6 est un réacteur à lit fluidisé, il est fluidisé de préférence par un mélange d'un gaz principal constitué de dioxyde de carbone recyclé et de vapeur d'eau pouvant contenir si nécessaire une fraction de gaz réducteur constitué d'une mélange de monoxyde de carbone et d'hydrogène.

Ceci présente l'avantage de décomposer dans le compartiment d'entrée de ce troisième réacteur 6 les sulfures et le soufre élémentaire présents sur les particules de lit d'oxydes métalliques en provenance du deuxième réacteur 2A et de renvoyer par l'évent 6B sous forme d'H2S ce soufre vers le deuxième réacteur 2A, pour oxydation.

Le mélange de monoxyde de carbone et d'hydrogène est soutiré à proximité du dispositif d'introduction 7 du combustible du deuxième réacteur 2A, où la pyrolyse flash subie par le combustible introduit génère des gaz réducteurs de ce type, grâce à une conduite 8.

Comme représenté sur la figure 2, un autre mode de réalisation particulièrement compact d'une installation à cycle thermochimique de conversion de combustibles avec capture du dioxyde de carbone grâce à un échange de tout type d'oxydes, comporte une première boucle à lit fluidisé circulant rapide 1' comportant un premier réacteur 1'A, d'oxydation, associé à au moins un premier séparateur cyclone 1'B et une conduite de retour 1'C en sortie du premier cyclone vers le premier réacteur et une deuxième boucle à lit fluidisé rapide 2' comportant un deuxième réacteur 2'A, de combustion et de réduction, pourvu d'un dispositif d'introduction de combustible, pouvant être constitué de plusieurs modules et associé à au moins un deuxième séparateur cyclone 2'B et une conduite de retour 2'C en sortie du deuxième cyclone vers le deuxième réacteur.

Le premier réacteur 1'A est disposé concentriquement autour du deuxième réacteur 2'A, la section du premier réacteur 1'A étant égale à environ trois fois la section du deuxième réacteur 2'A.

La hauteur de ces deux réacteurs 1'A, 2'A sont différentes, car le deuxième réacteur 2'A, où s'effectue la conversion lente du combustible, exige un temps de séjour gaz, typiquement le double du temps de séjour dans le premier réacteur 1'A, où ne s'effectue qu'une oxydation à l'air d'oxydes métalliques. La hauteur du deuxième réacteur 2'A est donc sensiblement égale au double de la hauteur du premier réacteur 1'A.

Ces deux boucles 1', 2' sont interconnectées par un premier moyen de transfert d'oxydes de la première boucle 1' vers le deuxième réacteur 2'A, à savoir une première conduite de transfert 3' connectée à la première conduite de retour 1"C, et par un second moyen de transfert d'oxydes de la deuxième boucle 2' vers le premier réacteur 1'A, à savoir une seconde conduite de transfert 4' connectée à la deuxième conduite de retour 2"C.

Plus précisément, les premier et deuxième réacteurs 1'A, 2'A sont associés à au moins deux premiers 1'B et 1"B et deuxièmes 2'B et 2"B séparateurs cyclones, disposés latéralement, avec chacun une conduite de retour 1'B, 1"B, 2'B, 2"B vers le réacteur correspondant 1'A, 2'A.

L'installation comporte un moyen réglable d'extraction de chaleur sur la première conduite de transfert d'oxydes 3' et sur la seconde conduite de transfert d'oxydes 4'. Ce moyen réglable d'extraction de chaleur est constitué d'un troisième réacteur 6', 6" disposé latéralement, sous chaque cyclone 1'B, 1"B du premier réacteur, pour minimiser les longueurs des liaisons avec les réacteurs.

Cet agencement symétrique assure une compacité importante.

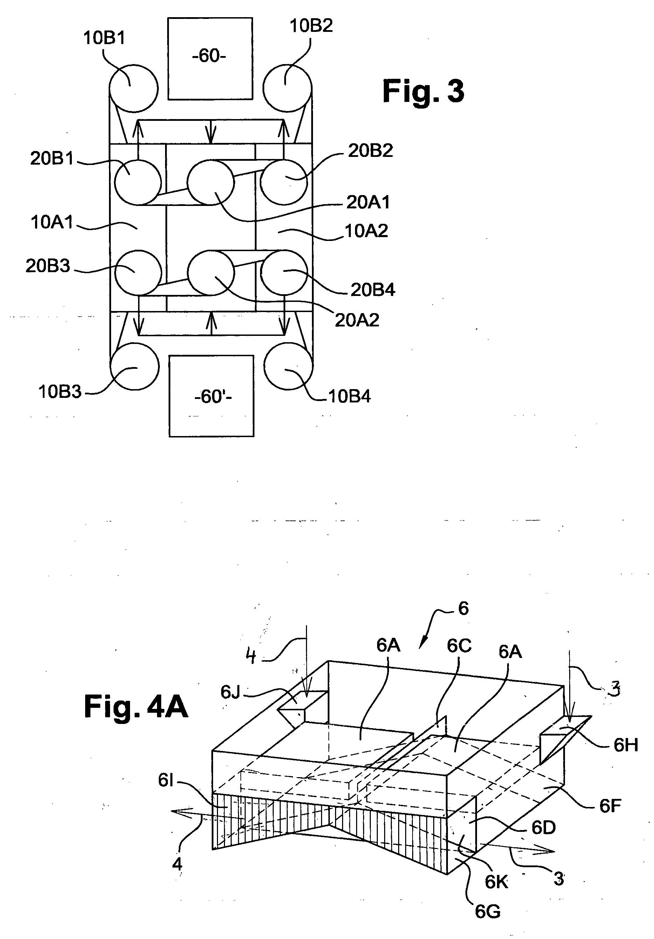

Comme représenté sur la figure 3, un autre mode de réalisation de type modulaire d'une installation à cycle thermochimique de conversion de combustibles avec capture du dioxyde de carbone grâce à un échange de tout type d'oxydes, comporte une première boucle à lit fluidisé circulant rapide comportant un premier réacteur 10A1, 10A2 d'oxydation, associé à quatre premiers séparateurs cyclones 10B1 à 10B4 et une boucle à lit fluidisé rapide comportant un deuxième réacteur 20A1, 20A2, de combustion et de réduction, pourvu d'un dispositif d'introduction de combustible, et associé à quatre deuxièmes séparateurs cyclones 20B1 à 20B4.

Ces deux boucles sont interconnectées par un premier moyen de transfert d'oxydes de la première boucle vers le deuxième réacteur 20A1, 20A2, et par un second moyen de transfert d'oxydes de la deuxième boucle vers le premier réacteur 10A1, 10A2.

L'installation comporte un moyen réglable d'extraction de chaleur 60, 60' sur la première conduite de transfert d'oxydes et sur la seconde conduite de transfert d'oxydes.

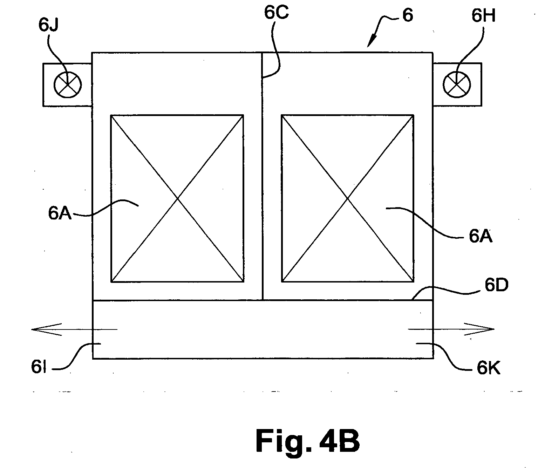

Les figures 4A et 4B représentent un mode de réalisation du troisième réacteur à lit mobile 6.

Le troisième réacteur est donc installé sur la première conduite de transfert d'oxydes 3 et sur la seconde conduite de transfert d'oxydes 4. Il reçoit les solides du premier séparateur cyclone 1B par la conduite de transfert 3 au moyen d'une entrée supérieure 6H, pour ensuite les envoyer dans le premier réacteur 1A par une sortie latérale 61 et il reçoit les solides du deuxième séparateur cyclone 2B par la conduite de transfert 4 au moyen d'une entrée supérieure 6J pour ensuite les envoyer dans le deuxième réacteur 2A par une sortie latérale 6K.

Il comporte des cloisons déversoirs longitudinale 6C et transversale 6D et des soles de fluidisation inclinées 6F, 6G pour répartir indifféremment les solides entrant par les deux entrées 6H, 6J vers les deux sorties 6I, 6K, avec un passage contrôlé par un débit de fluidisation à travers l'échangeur immergé 6A.

## Revendications

1. Procédé d'adaptation à tout type d'oxydes, d'une installation à cycle thermochimique de conversion de combustible avec capture du dioxyde de carbone, cette installation comportant une première boucle (1, 1') à lit fluidisé rapide comportant un premier réacteur (1A, 1'A), d'oxydation, et associé à au moins un premier séparateur cyclone (1B, 1'B, 1"B) et une conduite de retour (1C, 1'C, 1"C) en sortie du premier cyclone vers le premier réacteur et une deuxième boucle à lit fluidisé rapide (2, 2') comportant un deuxième réacteur (2A, 2'A), de combustion et de réduction, pourvu d'un dispositif d'introduction de combustible et associé à au moins un deuxième séparateur cyclone (2B, 2'B, 2"B) et une conduite de retour (2C, 2'C, 2"C) en sortie du deuxième cyclone vers le deuxième réacteur, ces deux boucles étant interconnectées par un premier moyen de transfert d'oxydes (3, 3') de la première boucle vers le deuxième réacteur et par un second moyen de transfert d'oxydes (4, 4') de la deuxième boucle vers le premier réacteur, procédé **caractérisé en ce qu'**il consiste à extraire de la chaleur de façon réglable sur ledit premier moyen de transfert d'oxydes (3, 3') et sur ledit second moyen de transfert d'oxydes (4, 4') au moyen d'au moins un troisième réacteur comportant un échangeur (6A) et dans lequel débouchent en entrée ledit premier moyen de transfert d'oxydes (3, 3') et ledit second moyen de transfert d'oxydes (4, 4'), ledit troisième réacteur à lit mobile comportant une entrée supérieure (6H) de réception des solides du premier séparateur cyclone (1B) et une sortie latérale (6I) de renvoi vers le premier réacteur (1A), ainsi qu'une entrée supérieure (6J) de réception des solides du deuxième séparateur cyclone (2B) et une sortie latérale (6K) de renvoi vers le deuxième réacteur (2A).

2. Installation à cycle thermochimique de conversion de combustible avec capture du dioxyde de carbone grâce à un échange de tout type d'oxydes, cette installation comportant une première boucle (1, 1') à lit fluidisé rapide comportant un premier réacteur (1A, 1'A), d'oxydation, et associé à au moins un premier séparateur cyclone (1B, 1'B, 1"B) et une conduite de retour (1C, 1'C, 1"C) en sortie du premier cyclone vers le premier réacteur et une deuxième boucle à lit fluidisé rapide (2, 2') comportant un deuxième réacteur (2A, 2'A), de combustion et de réduction, pourvu d'un dispositif d'introduction de combustible et associé à au moins un deuxième séparateur cyclone (2B, 2'B, 2"B) et une conduite de retour (2C, 2'C, 2"C) en sortie du deuxième cyclone vers le deuxième réacteur, ces deux boucles étant interconnectées par un premier moyen de transfert d'oxydes (3, 3') de la première boucle vers le deuxième réacteur et par un second moyen de transfert d'oxydes (4, 4') de la deuxième boucle vers le premier réacteur, pour la mise en oeuvre du procédé selon la revendication 1, **caractérisée en ce qu'**elle comporte un moyen réglable d'extraction de chaleur (6, 6', 6") sur ledit premier moyen de transfert d'oxydes (3, 3') et sur ledit second moyen de transfert d'oxydes (4, 4') et **en ce que** ce moyen réglable d'extraction de chaleur est constitué d'au moins un troisième réacteur comportant un échangeur (6A) et dans lequel débouchent en entrée ledit premier moyen de transfert d'oxydes (3, 3') et ledit second moyen de transfert d'oxydes (4, 4'), ledit troisième réacteur à lit mobile comportant une entrée supérieure (6H) de réception des solides du premier séparateur cyclone (1B) et une sortie latérale (6I) de renvoi vers le premier réacteur (1A), ainsi qu'une entrée supérieure (6J) de réception des solides du deuxième séparateur cyclone (2B) et une sortie latérale (6K) de renvoi vers le deuxième réacteur (2A).

3. Installation selon la revendication 2, **caractérisée en ce que** ledit moyen réglable d'extraction de chaleur est constitué d'au moins un troisième réacteur fluidisé.

4. Installation selon la revendication précédente, **caractérisée en ce que** ledit troisième réacteur est adapté pour être fluidisé par un mélange de dioxyde de carbone recyclé et de vapeur d'eau.

5. Installation selon la revendication précédente, **caractérisée en ce que** ledit mélange contient également du monoxyde de carbone et de l'hydrogène.

6. Installation selon la revendication précédente, **caractérisée en ce que** ledit mélange de monoxyde de carbone et d'hydrogène est soutiré à proximité dudit dispositif d'introduction du combustible dudit deuxième réacteur.

7. Installation selon l'une des revendications précédentes, **caractérisée en ce que** ledit troisième réacteur à lit mobile comporte des cloisons déversoirs longitudinale (6C) et transversale (6D) et des soles de fluidisation inclinées (6F, 6G), de façon à répartir indifféremment les solides entrant par les dites deux entrées (6H, 6J) vers les dites deux sorties (6I, 6K), avec un passage contrôlé par un débit de fluidisation à travers ledit échangeur immergé.

8. Installation selon l'une des revendications 3 à 7 **caractérisée en ce que** ledit premier réacteur (1'A) est disposé concentriquement autour dudit deuxième réacteur (2'A).

9. Installation selon la revendication précédente, **caractérisée en ce que** ledit troisième réacteur (6', 6") est disposé latéralement audit premier réacteur (1'A, 1"A).

10. Installation selon la revendication 8 ou 9, **caractérisée en ce que** lesdits premier et deuxième réacteurs (1'A, 2'A) sont associés à au moins deux dits premiers et deuxièmes séparateurs cyclones (1'B, 1"B, 2'B, 2"B), disposés latéralement.

11. Installation selon la revendication précédente, **caractérisé en ce qu'**un dit troisième réacteur (6', 6") est disposé sous chaque cyclone (1'B, 1"B, 2"B, 2'B) dudit premier et dudit deuxième réacteurs.

## Patentansprüche

1. Verfahren zur Anpassung an alle Arten von Oxiden einer Anlage mit thermochemischem Konversionskreislauf von Brennstoff mit Kohlendioxidabsorption, wobei diese Anlage eine erste schnelle Wirbelbettschleife (1, 1'), aufweisend einen ersten Oxidationsreaktor (1A, 1'A), und zugeordnet mindestens einem ersten Zyklonseparator (1 B, 1'B, 1 "B), und eine Rückführungsleitung (1 C, 1'C, 1 "C) am Ausgang des ersten Zyklons in Richtung des ersten Reaktors, und eine zweite schnelle Wirbelbettschleife (2, 2'), aufweisend einen zweiten Verbrennungs- und Reduktionsreaktor (2A, 2'A), ausgestattet mit einer Brennstoffzufuhrvorrichtung und zugeordnet mindestens einem zweiten Zyklonseparator (2B, 2'B, 2"B) und einer Rückführungsleitung (2C, 2'C, 2"C) am Ausgang des zweiten Zyklons in Richtung des zweiten Reaktors, aufweist, wobei diese zwei Schleifen durch ein erstes Oxidtransfermittel (3, 3') von der ersten Schleife zum zweiten Reaktor und durch ein zweites Oxidtransfermittel (4, 4') von der zweiten Schleife zum ersten Reaktor miteinander verbunden sind, **dadurch gekennzeichnet, dass** das Verfahren darin besteht, Wärme regulierbar dem ersten Oxidtransfermittel (3, 3') und dem zweiten Oxidtransfermittel (4, 4') mittels mindestens eines dritten Reaktors zu entnehmen, der einen Tauscher (6A) aufweist und in den am Eingang das erste Oxidtransfermittel (3, 3') und das zweite Oxidtransfermittel (4, 4') münden, wobei der dritte Flüssigbett-Reaktor einen oberen Empfangseingang (6H) der Feststoffe des ersten Zyklonseparators (1 B) und einen Umleitungs-Seitenausgang (6I) zum ersten Reaktor (1A) sowie einen oberen Empfangseingang (6J) der Feststoffe des zweiten Zyklonseparators (2B) und einen Umleitungs-Seitenausgang (6K) zum zweiten Reaktor (2A) aufweist.

2. Anlage mit thermochemischem Konversionskreislauf von Brennstoff mit Kohlendioxidabsorption dank Austauschs jeder Art von Oxiden, wobei diese Anlage eine erste schnelle Wirbelbettschleife (1, 1'), aufweisend einen ersten Oxidationsreaktor (1 A, 1'A), und zugeordnet mindestens einem ersten Zyklonseparator (1 B, 1'B, 1 "B), und eine Rückführungsleitung (1 C, 1'C, 1 "C) am Ausgang des ersten Zyklons in Richtung des ersten Reaktors, und eine zweite schnelle Wirbelbettschleife (2, 2'), aufweisend einen zweiten Verbrennungs- und Reduktionsreaktor (2A, 2'A), ausgestattet mit einer Brennstoffzufuhrvorrichtung und zugeordnet mindestens einem zweiten Zyklonseparator (2B, 2'B, 2"B) und einer Rückführungsleitung (2C, 2'C, 2"C) am Ausgang des zweiten Zyklons in Richtung des zweiten Reaktors, aufweist, wobei diese zwei Schleifen durch ein erstes Oxidtransfermittel (3, 3') von der ersten Schleife zum zweiten Reaktor und durch ein zweites Oxidtransfermittel (4, 4') von der zweiten Schleife zum ersten Reaktor miteinander verbunden sind, für die Umsetzung des Verfahrens nach Anspruch 1, **dadurch gekennzeichnet, dass** sie ein regulierbares Wärmeextraktionsmittel (6, 6', 6") auf dem ersten Oxidtransfermittel (3, 3') und auf dem zweiten Oxidtransfermittel (4, 4') aufweist und dass das regulierbare Wärmeextraktionsmittel von mindestens einem dritten Reaktor gebildet ist, der einen Tauscher (6A) aufweist und in den am Eingang das erste Oxidtransfermittel (3, 3') und das zweite Oxidtransfermittel (4, 4') münden, wobei der dritte Flüssigbett-Reaktor einen oberen Empfangseingang (6H) der Feststoffe des ersten Zyklonseparators (1 B) und einen Umleitungs-Seitenausgang (6I) zum ersten Reaktor (1A) sowie einen oberen Empfangseingang (6J) der Feststoffe des zweiten Zyklonseparators (2B) und einen Umleitungs-Seitenausgang (6K) zum zweiten Reaktor (2A) aufweist.

3. Anlage nach Anspruch 2, **dadurch gekennzeichnet, dass** das einstellbare Wärmeextraktionsmittel von mindestens einem dritten Wirbelbettreaktor gebildet ist.

4. Anlage nach vorangehendem Anspruch, **dadurch gekennzeichnet, dass** der dritte Reaktor geeignet ist, anhand eines Gemischs aus recyceltem Kohlendioxid und Wasserdampf fluidisiert zu sein.

5. Anlage nach vorangehendem Anspruch, **dadurch gekennzeichnet, dass** das Gemisch ebenfalls Kohlenmonoxid und Wasserstoff enthält.

6. Anlage nach vorangehendem Anspruch, **dadurch gekennzeichnet, dass** das Gemisch aus Kohlenmonoxid und Wasserstoff in der Nähe der Brennstoffzufuhrvorrichtung des zweiten Reaktors abgezogen wird.

7. Anlage nach einem der vorangehenden Ansprüche, **dadurch gekennzeichnet, dass** der dritte Flüssigbett-Reaktor eine längliche (6C) und eine transversale (6D) Ableitungs-Trennwand und geneigte Wirbelbettsohlen (6F, 6G) aufweist, um die Feststoffe, die durch die zwei Eingänge (6H, 6J) in Richtung der zwei Ausgänge (61, 6K) eintreten, unterschiedslos zu verteilen, mit einem kontrollierten Durchgang durch ein Wirbelbettfluss durch den eingetauchten Tauscher.

8. Anlage nach einem der Ansprüche 3 bis 7, **dadurch gekennzeichnet, dass** der erste Reaktor (1'A) konzentrisch um den zweiten Reaktor (2'A) angeordnet ist.

9. Anlage nach vorangehendem Anspruch, **dadurch gekennzeichnet, dass** der dritte Reaktor (6', 6") seitlich zum ersten Reaktor (1'A, 1 "A) angeordnet ist.

10. Anlage nach Anspruch 8 oder 9, **dadurch gekennzeichnet, dass** der erste und zweite Reaktor (1'A, 2'A) mindestens zwei sogenannten ersten und zweiten Zyklonseparatoren (1'B, 1 "B, 2'B, 2"B) zugeordnet sind, die seitlich angeordnet sind.

11. Anlage nach vorangehendem Anspruch, **dadurch gekennzeichnet, dass** ein sogenannter dritter Reaktor (6', 6") unter jedem Zyklon (1'B, 1"B, 2"B, 2'B) des ersten und zweiten Reaktors angeordnet ist.

## Claims

1. A method for adapting to any type of oxides, a facility with a fuel conversion thermochemical cycle, with carbon dioxide capture, this facility including a first loop (1, 1') with a fast fluidized bed including a first oxidation reactor (1A, 1'A), and associated with at least one cyclone separator (1B, 1'B, 1"B) and a return conduit (1C, 1'C, 1"C) at the outlet of the first cyclone towards the first reactor and a second loop (2, 2') with a fast fluidized bed including a second combustion and reduction reactor (2A, 2'A), provided with a fuel introduction device and associated with at least one second cyclone separator (2B, 2'B, 2"B) and a return conduit (2C, 2'C, 2"C) at the outlet of the second cyclone towards the second reactor, both of these loops being interconnected by a first oxide transfer means (3, 3') from the first loop to the second reactor and by a second oxide transfer means (4, 4') from the second loop to the first reactor, a method **characterized in that** it consists of extracting heat in a adjustable way on said first oxide transfer means (3, 3') and on said second oxide transfer means (4, 4') by means of at least one third reactor including an exchanger (6A) and into which at the inlet open said first oxide transfer means (3, 3') and said second oxide transfer means (4, 4'), said third reactor with a mobile bed including an upper inlet (6H) for receiving solids from the first cyclone separator (1B) and a side outlet (6I) for return to the first reactor (1A), as well as an upper inlet (6J) for receiving solids from the second cyclone separator (2B) and a side outlet (6K) for return to the second reactor (2A).

2. A facility with a fuel conversion thermochemical cycle, with carbon dioxide capture by an exchange of any type of oxides, this facility including a first loop (1, 1') with a fast fluidized bed including a first oxidation reactor (1A, 1'A), and associated with at least one cyclone separator (1B, 1'B, 1"B) and a return conduit (1C, 1'C, 1"C) at the outlet of the first cyclone towards the first reactor and a second loop (2, 2') with a fast fluidized bed including a second combustion and reduction reactor (2A, 2'A) obtained by disintegration with ultrasonic , provided with a device for introducing fuel and associated with at least one second cyclone separator (2B, 2'B, 2"B) and a return conduit (2C, 2'C, 2"C) at the outlet of the second cyclone towards the second reactor, both of these loops being interconnected by a first oxide transfer means (3, 3') from the first loop to the second reactor and by a second oxide transfer means (4, 4') from the second loop to the first reactor for applying the method according to claim 1, **characterized in that** it includes an adjustable means for extracting heat (6, 6', 6") on said first oxide transfer means (3, 3') and on said second oxide transfer means (4, 4'), and **in that** this adjustable means for extracting heat consists of at least one third reactor including an exchanger (6A) and into which open at the inlet said first oxide transfer means (3, 3') and said second oxide transfer means (4, 4'), said third reactor with a mobile bed including an upper inlet (6H) for receiving solids from the first cyclone separator (1B) and a side outlet (6I) for return to the first reactor (1A) as well as an upper inlet (6J) for receiving solids from the second cyclone separator (2B) and a side outlet (6K) for return to the second reactor (2A).

3. The facility according to claim 2, **characterized in that** said adjustable means for extracting heat consists of at least one third fluidized reactor.

4. The facility according to the preceding claim, **characterized in that** said third reactor is adapted for being fluidized by a mixture of recycled carbon dioxide and of steam.

5. The facility according to the preceding claim, **characterized in that** said mixture also contains carbon monoxide and hydrogen.

6. The facility according to the preceding claim, **characterized in that** said mixture of carbon monoxide and of hydrogen is drawn off in proximity to said device for introducing fuel into said second reactor.

7. The facility according to one of the preceding claims, **characterized in that** said reactor with a mobile bed includes longitudinal (6C) and transverse (6D) spillway partitions and tilted fluidization soles (6F, 6G), so as to equally distribute the solids entering through said both inlets (6H, 6J) towards said both outlets (61, 6K), with a passage controlled by a fluidization flow rate through said immersed exchanger.

8. The facility according to one of claims 3 to 7, **characterized in that** said first reactor (1'A) is positioned concentrically around said second reactor (2'A).

9. The facility according to the preceding claim, **characterized in that** said third reactor (6', 6") is positioned laterally to said first reactor (1'A, 1"A).

10. The facility according to claim 8 or 9, **characterized in that** said first and second reactors (1'A, 2'A) are associated with at least both of said first and second cyclone separators (1'B, 1"B, 2'B, 2"B), positioned laterally.

11. The facility according to the preceding claim, **characterized in that** a said third reactor (6', 6") is positioned under each cyclone (1'B, 1"B, 2'B, 2"B) of said first and said second reactors.
